# EUROPEAN PATENT SPECIFICATION

(11) **EP 3 211 258 B1**
(45) Date of publication and mention of the grant of the patent: **20.11.2019**
(21) Application number: 15853378.6
(22) Date of filing: 29.09.2015
(51) Int. Cl.: F16C 19/56, B23B 19/02, F16C 19/16, F16C 25/08

(54) **COMBINATION BALL BEARING AND MAIN SHAFT DEVICE FOR MACHINE TOOL**
KOMBINATIONSKUGELLAGER UND HAUPTWELLENVORRICHTUNG FÜR WERKZEUGMASCHINE
ROULEMENT À BILLES COMBINÉ ET DISPOSITIF D'ARBRE PRINCIPAL POUR MACHINE-OUTIL

(30) Priority: 23.10.2014 JP 2014216306
(43) Date of publication of application: 30.08.2017
(73) Proprietor: NSK Ltd., Tokyo 141-8560 (JP)
(72) Inventor: MATSUNAGA, Kyohei, Fujisawa-shi Kanagawa 251-8501 (JP); KATSUNO, Yoshiaki, Fujisawa-shi Kanagawa 251-8501 (JP); MATSUYAMA, Naoki, Fujisawa-shi Kanagawa 251-8501 (JP)
(74) Representative: Grünecker Patent- und Rechtsanwälte PartG mbB
(86) International application number: PCT/JP2015/077621
(87) International publication number: WO 2016/063691

(56) References cited:
- DE-A1-102006 020 271
- JP-A- 2006 307 912
- JP-A- 2006 322 496
- JP-A- 2006 322 496
- JP-A- 2014 059 060
- JP-A- 2014 059 060

## Description

### TECHNICAL FIELD

The present invention relates to a combination ball bearing and a spindle device for machine tool.

### RELATED ART

In recent years, a shape of a workpiece to be machined, which is to be machined by a machine tool, has been complicated. As the shape of the workpiece has been complicated, a structure of the machine tool itself has been also complicated so as to improve machining efficiency by reducing a number of change times of a stage. As an example of the complication of the structure of the machine tool, a multi-spindle machining apparatus such as a five-spindle machining apparatus can be exemplified.

Also, most of the recent machine tools are configured to perform the machining by numerical control (NC). As the shape of the workpiece has been complicated (for example, three-dimensional cubic curved surface contour machining such as a body mold of an automobile, an artificial joint and the like) and the machine tool structure has been complicated, a machining program for numerical control has been also complicated. For this reason, an error is likely to occur when preparing the machining program of the NC machine tool. As a result, a trouble (hereinafter, referred to as "main shaft collision") that a rotating part (a tool, a holder part for holding the tool, and the like) of the main shaft contacts, interferes and collides with a workpiece to be machined and a peripheral member such as a bed, a table or the like due to a machine malfunction is likely to occur. Due to the main shaft collision, an indentation is formed at a contact part between a ball and a raceway surface of a rolling bearing incorporated to the machine tool main shaft. At this state, when the main shaft is used, diverse problems are caused. For example, the machining precision is lowered or an abnormal sound is generated due to vibrations resulting from pressing of the ball of the rolling bearing on the indentation. Further, abrasion of the raceway surface occurs from the indentation, which may develop into seizure of the rolling bearing. Also, the main shaft collision may be caused due to an operator's error or a freak accident when manufacturing the machine tool.

A double row rolling bearing that is used for the machine tool and the like has been known in which a ball diameter of each row is changed and increased to improve bearing stiffness and a bearing dynamic load capacity is increased to prolong the lifespan (for example, refer to Patent Document 1).

### Citation List

### Patent Documents

Patent Document 1: Japanese Patent Application Publication No. 2004-286116A

### SUMMARY OF THE INVENTION

### Problems To Be Solved

In the spindle device for machine tool, a combination ball bearing of which angular ball bearings of three or more rows are axially arranged so as to increase the main shaft stiffness may be used. Also in the combination ball bearing, when load is applied to a tool-side tip end of the main shaft due to the main shaft collision, the bearing of the row axially closest to the tool is most applied with load. Therefore, an indentation, which is to cause the machining problem or acoustic problem at the contact part between the ball and the raceway surface of the rolling bearing, is likely to be formed.

Also, when the angular ball bearing is axially applied with the large load, a position of a contact ellipse between the ball and the raceway surface is offset, so that the ball may run on a groove shoulder of a bearing ring and may be hurt.

In Patent Document 1 disclosing the double row rolling bearing, the combination ball bearing is not disclosed and a shock resistance is not considered.

The present invention has been made in view of the above situations, and an object thereof is to provide a combination ball bearing and a spindle device for machine tool capable of improving a shock resistance of a bearing to which large load is to be applied.

### Means for Solving Problems

The object of the present invention is achieved by a combination ball bearing according to claim 1.

### Effects of the Invention

According to the combination ball bearing of the present invention, the ball diameter of at least one (particularly, the bearing, to which large load is to be applied, of the outer row bearings) of the angular ball bearings (hereinafter, referred to as "outer row bearings") arranged at the axially outer side is greater than the ball diameter of the angular ball bearing (hereinafter, referred to as "inner row bearing") arranged at the axially inner side. Therefore, limit load (minimum load at which an indentation causing the machining precision problem or acoustic problem is to occur at a contact part between a ball and a raceway surface) of the outer row bearing of which the ball diameter is set greater increases, so that it is possible to suppress the indentation, which causes the machining precision problem or acoustic problem when the large load is applied to the outer row bearing, and to improve the shock resistance.

As a result, in a case where the present invention is applied to the spindle device, when load is applied to a tool-side tip end of the main shaft, it is possible to reduce a risk that an indentation is to occur at the bearing of the row axially closest to the tool, which is most applied with the load, i.e., the outer row bearing having the greater ball diameter, and to improve the shock resistance of the bearing of the row axially closest to the tool.

### BRIEF DESCRIPTION OF DRAWINGS

FIG. 1 is a sectional view depicting a spindle device in which a combination ball bearing of an embodiment is applied as front side bearings.
FIG. 2 is a sectional view of the combination ball bearing of the embodiment.
FIG. 3 is a sectional view of a combination ball bearing of a first example not forming part of the invention.
FIG. 4 is a sectional view of a combination ball bearing of a second example not forming part of the invention.
FIG. 5 is a sectional view of a combination ball bearing in accordance with a first modified embodiment.
FIG. 6 is a sectional view of a combination ball bearing of a third example not forming part of the invention.
FIG. 7 is a schematic view of a general machine tool main shaft to which a four-row back-surface combination of angular ball bearings is mounted.

### DETAILED DESCRIPTION OF EMBODIMENTS

Hereinafter, a combination ball bearing in accordance with an embodiment of the present invention will be described in detail with reference to the drawings.

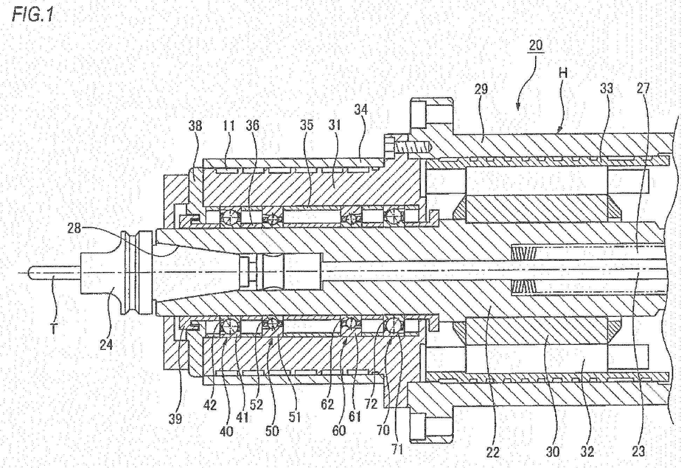

FIG. 1 depicts a spindle device 20 to which the combination ball bearing of the embodiment is applied. The spindle device 20 is a motor built-in type, and has a hollow rotary shaft 22 provided at an axially central part thereof. A draw bar 23 is inserted and fitted to a shaft center of the rotary shaft 22 to be freely slidable. The draw bar 23 is provided with a tool holder 24 having a tool T mounted thereto. The draw bar 23 is urged in a direction (a right direction in FIG. 1) opposite to the tool by a force of a disc spring 27, so that the tool holder 24 is fitted to a tapered surface 28 of the rotary shaft 22. As a result, the tool T is integrally mounted to the rotary shaft 22, together with the draw bar 23 and the tool holder 24. Also, the rotary shaft 22 is rotatably supported to a housing H by front side bearings (combination ball bearing) 40, 50, 60, 70 configured to support a tool-side of the rotary shaft and rear side bearings configured to support an opposite side to the tool.

A rotor 30 is externally fitted to an outer peripheral surface of the rotary shaft 22 between the front side bearings 40, 50, 60, 70 and the rear side bearings. Also, a stator 32 arranged around the rotor 30 is fixed to an outer cylinder 29 of the housing H. More specifically, a cooling jacket 33 shrink-fitted to the stator 32 is internally fitted to the outer cylinder 29 of the housing H, so that the stator 32 is fixed to the outer cylinder 29. Therefore, the rotor 30 and the stator 32 configure a motor, and power is fed to the stator 32, so that a rotational force is generated for the rotor 30 and the rotary shaft 22 is thus rotated.

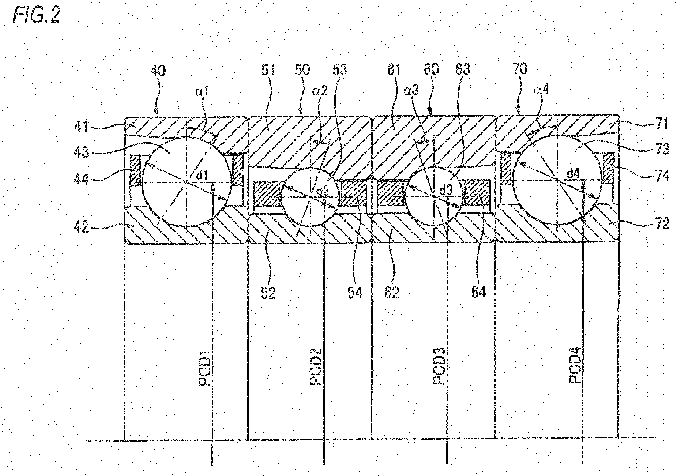

As shown in FIG. 2, the front side bearings 40, 50, 60, 70 are angular ball bearings that have outer rings 41, 51, 61, 71, inner rings 42, 52, 62, 72, a plurality of balls (rolling elements) 43, 53, 63, 73 arranged with contact angles α1, α2, a3, α4, and retainers 44, 54, 64, 74 configured to hold the plurality of balls 43, 53, 63, 73 at substantially equal intervals in a circumferential direction, respectively. The front side bearings 40, 50, 60, 70 are applied with fixed-position preloads at a state where the front side bearings 40, 50 of an axially outer side of first and second rows from the tool-side and the front side bearings 60, 70 of an axially inner side of third and fourth rows are arranged so as to configure a back-surface combination. Also, in the embodiment, outer and inner diameters and axial widths of the front side bearings 40, 50, 60, 70 are designed to be the same.

The outer rings 41, 51, 61, 71 are internally fitted to a front side bearing housing 31 fixed to the outer cylinder 29, and are also axially fixed to the front side bearing housing 31 via a plurality of outer ring spacers 35 by a front side bearing outer ring retaining member 38 bolted to the front side bearing housing 31. Also, the inner rings 42, 52, 62, 72 are externally fitted to the rotary shaft 22, and are also axially fixed to the rotary shaft 22 via a plurality of inner ring spacers 36 by a nut 39 fastened to the rotary shaft 22.

Meanwhile, in FIG. 2, the outer ring spacers 35 and the inner ring spacers 36 are not shown. However, the combination ball bearing of the present invention includes any of a configuration where the spacers are provided and a configuration where the spacers are not provided.

Also, a circulation path 11 through which cooling oil is to circulate is formed between an outer peripheral surface of the front side bearing housing 31 and a cover 34 externally fitted to the front side bearing housing 31. The cooling oil of which temperature is controlled is enabled to circulate through the circulation path 11, so that the respective front side bearings 40, 50, 60, 70 are cooled. In the motor built-in type spindle device 20 accompanied by heat generation of the motor, it is important to suppress thermal displacement so as to improve the precision of the main shaft. By the circulation path 11, it is possible to suppress an increase in temperature of the main shaft resulting from the heat generation of the bearings 40, 50, 60, 70 or heat generation of the stator 32 upon high-speed rotation.

Herein, in the embodiment, as shown in FIG. 2, ball diameters d1, d4 of the balls 43, 73 of the outer row bearings 40, 70 of first and fourth rows from the tool-side of the front side bearings 40, 50, 60, 70 are designed greater than ball diameters d2, d3 of the balls 53, 63 of the inner row bearings 50, 60 of second and third rows from the tool-side.

Also, ball pitch circle diameters PCD1, PCD4 of the outer row bearings 40, 70 are designed greater than ball pitch circle diameters PCD2, PCD3 of the inner row bearings 50, 60.

Also, contact angles α1, α4 of the outer row bearings 40, 70 are designed greater than contact angles α2, α3 of the inner row bearings 50, 60.

In this way, the ball diameters d1, d4 of the outer row bearings 40, 70 are set greater, so that limit load (lowest load at which an indentation causing a machining problem or an acoustic problem at the contact part between the ball and the raceway surface) of the bearings 40, 70 increases. As a result, a risk that when load is applied to a tool-side tip end of the main shaft, an indentation is to be caused at the bearing of the row axially closest to the tool, which most bears the load, i.e., the outer row bearing 40 of first row decreases.

Also, in general, when the spindle device 20 for machine tool is rotated at high speed, temperature of rolling contact parts between the balls 43, 53, 63, 73 and the inner and outer rings 42, 52, 62, 72, 41, 51, 61, 71 increases. When the temperature increase is high, the seizure resulting from oil film breakage may occur. For this reason, it is very important to suppress the heat generation resulting from rolling friction of the bearing. However, the outer row bearings 40, 70 of first and fourth rows can more easily escape the heat, which is generated due to the rolling frictions of the bearings, to an outside and have a lower possibility that they are to be seized due to the heat generation resulting from the rolling frictions of the bearings, as compared to the inner row bearings 50, 60 of the second and third rows. Therefore, even when the ball diameters d1, d4 of the outer row bearings 40, 70 are set greater and thus the heat generation resulting from the rolling frictions of the outer row bearings 40, 70 increases to some extent, the outer row bearings can be used without any problem.

On the other hand, since the inner row bearings 50, 60 of second and third rows are obstructed by the heat generation and temperature rising of the outer row bearings 40, 70 of first and fourth rows, the heat transference thereof is degraded, so that the inner row bearings are difficult to escape the heat, which is generated due to the rolling frictions of the bearings, to the outside. Particularly, in the case of the motor built-in type spindle device 20 of the embodiment, since the heat generated from the rotor 30 is transferred to the front side bearings 40, 50, 60, 70 through the inside of the rotary shaft 22, the stricter conditions are presented.

Also, while the temperatures of the outer rings 41, 51, 61, 71 of the front side bearings are suppressed by the cooling of the cooling oil through the circulation path 11 formed in the front side bearing housing 31, the increase in temperatures of the inner rings 42, 52, 62, 72, which are not directly contacted to the cooling part, cannot be suppressed. As a result, a temperature difference occurs between the inner and outer rings of the bearings (inner ring temperature > outer ring temperature).

Also, since the inner row bearings 50, 60 of second and third rows positioned at a central part of the circulation path 11 of the outer cylinder cooling oil achieve the most cooling effect, the temperature difference between the inner and outer rings further increases, as compared to the outer row bearings 40, 70 of first and fourth rows. When the temperature difference occurs between the inner and outer rings, an internal gap of the bearing decreases and internal preload increases, so that a PV value of the rolling contact part increases, which causes the seizure. For this reason, the seizure problem of the bearing of the main shaft rotating at high speed is caused at the inner row bearings 50, 60 of second and third rows, in most cases.

Therefore, a configuration where the ball diameters d2, d3 of the inner row bearings 50, 60 of second and third rows are set large is not a good plan because the seizure risk further increases.

Therefore, when only the ball diameters d1, d4 of the outer row bearings 40, 70 are set large and the ball diameters d2, d3 of the inner row bearings 50, 60 are set smaller than the ball diameters d1, d4 of the outer row bearings 40, 70, it is possible to improve the shock resistance without increasing the seizure risk.

Also, regarding the front side bearings 40, 50, 60, 70 of which the angular ball bearings having the contact angle are arranged in the back-surface combination, the ball pitch circle diameters PCD1, PCD4 of the outer row bearings 40, 70 are set greater than the ball pitch circle diameters PCD2, PCD3 of the inner row bearings 50, 60, so that it is possible to increase a moment length and to improve the moment stiffness of the combination bearing and the spindle device 20.

When the ball pitch circle diameter is increased, a dmn value increases upon the rotation of the bearing and the heat generation resulting from the rolling friction of the bearing increases. However, as described above, the outer row bearings 40, 70 can be used without any problem even though the heat generation of the bearings increases to some extent. On the other hand, in the case of the inner row bearings 50, 60, it is required to avoid the increase in an amount of heat generation because of the above-described reason. Therefore, it is necessary to reduce the amount of heat generation of the inner row bearings 50, 60 by setting the ball pitch circle diameters PCD2, PCD3 of the inner row bearings 50, 60 smaller than the ball pitch circle diameters PCD1, PCD4 of the outer row bearings 40, 70.

Also, the contact angles α1, α4 of the outer row bearings 40, 70 are set greater than the contact angles α2, α3 of the inner row bearings 50, 60, so that it is possible to improve the axial stiffness, in addition to the improvement on the moment stiffness resulting from the lengthening of the moment lengths of the combination ball bearing and the spindle device 20.

Herein, the radial stiffness of the main shaft system is affected by the bending stiffness of the rotary shaft 22, in addition to the stiffness of the bearing. However, the axial stiffness is substantially determined by the stiffness of the bearing. In general, when the contact angle of the bearing is increased, a slip such as a spin slip, a gyro slip or the like, which is to occur in the angular ball bearing having the contact angle, increases, so that the amount of heat generation of the bearing increases. As described above, while the increase in the amount of heat generation resulting from the increase in the contact angles is allowed to some extent for the outer row bearings 40, 70, the increase in the amount of heat generation cannot be allowed for the inner row bearings 50, 60. Therefore, the contact angles α2, α3 of the inner row bearings 50, 60 are set smaller than the contact angles α1, α4 of the outer row bearings 40, 70 so as to reduce the amount of heat generation.

Meanwhile, in the embodiment, the outer row bearings 40, 70 have the ball diameters, ball pitch circle diameters and contact angles greater than those of the inner row bearings 50, 60. Therefore, when the dmn value of the bearing increases, the heat generation of the main shaft increases, as compared to the specification of the related art. However, the seizure problem is not caused at a normal rotational service level. However, when a range of service number of rotations of which the dmn value is equal to or greater than 500,000, preferably, 800,000 is assumed, ceramic balls (Si₃N₄ or the like) having a specific gravity less than iron are adopted only for the outer row bearings 40, 70, so that the increase in internal load due to the centrifugal forces of the balls is suppressed and the heat generation can be thus suppressed.

Also, as one measure for increasing the machining efficiency of the spindle device 20 for machine tool, so-called heavy cutting in which a feeding amount per one blade of a tool is increased or a depth of cut of the machining is increased may be exemplified. In the embodiment, it is possible to perform the heavy cutting better than ever before by the improvement effects of the moment stiffness and the axial stiffness.

In the meantime, considering the increase in the internal load due to the high centrifugal forces of the balls 43, 73 of the outer row bearings 40, 70 and the decrease in the load capacity of the inner row bearings 50, 60, a ball diameter ratio and a ball pitch circle diameter ratio preferably satisfy following conditions, from a standpoint of securing an optimal balance therebetween. Meanwhile, the ball diameter ratio indicates a value obtained by dividing the ball diameters d1, d4 of the outer row bearings 40, 70 by the ball diameters d2, d3 of the inner row bearings 50, 60. Also, the ball pitch circle diameter ratio indicates a value obtained by dividing the ball pitch circle diameters PCD1, PCD4 of the outer row bearings 40, 70 by the ball pitch circle diameters PCD2, PCD3 of the inner row bearings 50, 60.

ball diameter ratio: 1.0 < ball diameter of outer row bearing/ ball diameter of inner row bearing <4.6
ball pitch circle diameter ratio: 1.0 ≤ ball pitch circle diameter of outer row bearing/ball pitch circle diameter of inner row bearing <1.5

As described above, according to the combination ball bearing of the embodiment, the ball diameters d1, d4 of the balls 43, 73 of the outer row bearings 40, 70 of first and fourth rows from the tool-side of the front side bearings 40, 50, 60, 70 are designed greater than the ball diameters d2, d3 of the balls 53, 63 of the inner row bearings 50, 60 of second and third rows from the tool-side. Therefore, it is possible to reduce a risk that the indentation is to be caused at the outer row bearings 40, 70 and to improve the shock resistance of the bearing of the row axially closest to the tool (the outer row bearing 40 of first row).

Also, since the ball pitch circle diameters PCD1, PCD4 of the outer row bearings 40, 70 are designed greater than the ball pitch circle diameters PCD2, PCD3 of the inner row bearings 50, 60, it is possible to increase the moment stiffness of the combination ball bearing by lengthening the moment length.

Also, since the contact angles **α1, α4** of the outer row bearings 40, 70 are designed greater than the contact angles **α2, α3** of the inner row bearings 50, 60, it is possible to increase the moment stiffness and the axial stiffness of the combination ball bearing.

In the meantime, the present invention is not limited to the embodiment but to the appended claims, and can be appropriately modified and improved.

In the embodiment, the outer row bearings 40, 70 have the greater ball diameters, ball pitch circle diameters and contact angle, as compared to the inner row bearings 50, 60. However, in the present invention, at least the ball diameters d1, d4 of the outer row bearings 40, 70 may be designed greater than the ball diameters d2, d3 of the inner row bearings 50, 60.

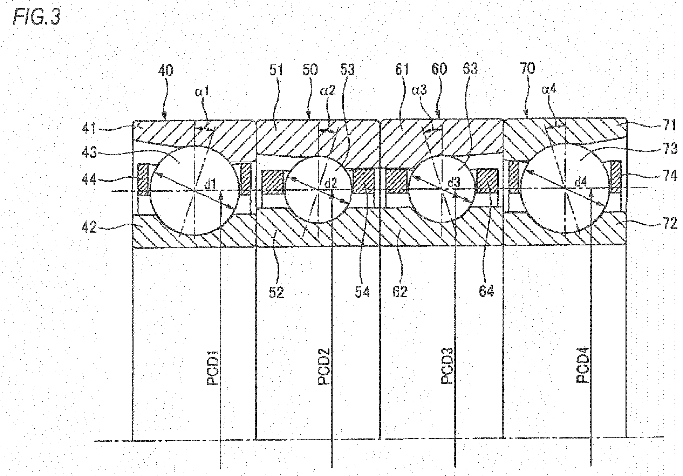

That is, in a combination ball bearing of a first example not forming part of the invention shown in FIG. 3, while the ball diameters d1, d4 of the outer row bearings 40, 70 are set greater than the ball diameters d2, d3 of the inner row bearings 50, 60, the ball pitch circle diameters PCD1, PCD2, PCD3, PCD4 of the front side bearings 40, 50, 60, 70 are set to be the same (PCD1=PCD2=PCD3=PCD4) and the contact angles α1, α2, α3, α4 are also set to be same **(α2=α2=α3=α4).**

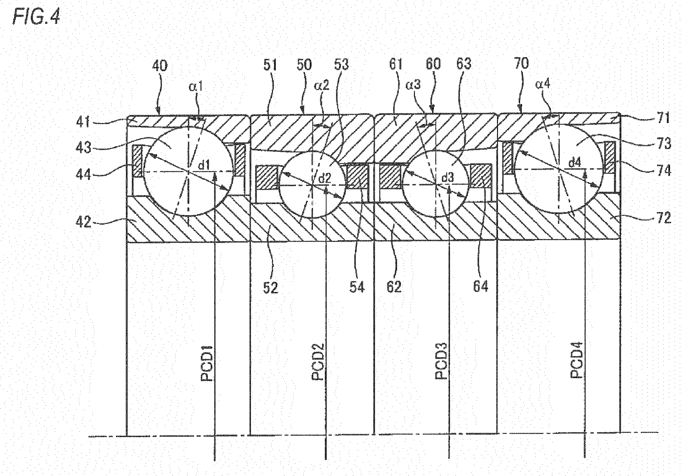

Also, in a combination ball bearing of a second example not forming part of the invention shown in FIG. 4, while the ball diameters d1, d4 of the outer row bearings 40, 70 are set greater than the ball diameters d2, d3 of the inner row bearings 50, 60 and the ball pitch circle diameters PCD1, PCD4 of the outer row bearings 40, 70 are set greater than the ball pitch circle diameters PCD2, PCD3 of the inner row bearings 50, 60, the contact angles **α1, α2, α3, α4** of the front side bearings 40, 50, 60, 70 are set to be same **(α1=α2=α3=α4).**

Also, in the combination ball bearings of FIGS. 2 to 4, the multiple-row angular ball bearing of four rows has been described. However, the
combination ball bearing of other examples may have the ball bearings of at least three rows.

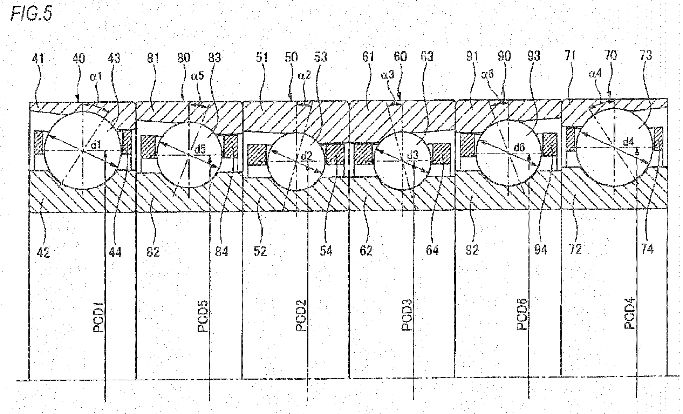

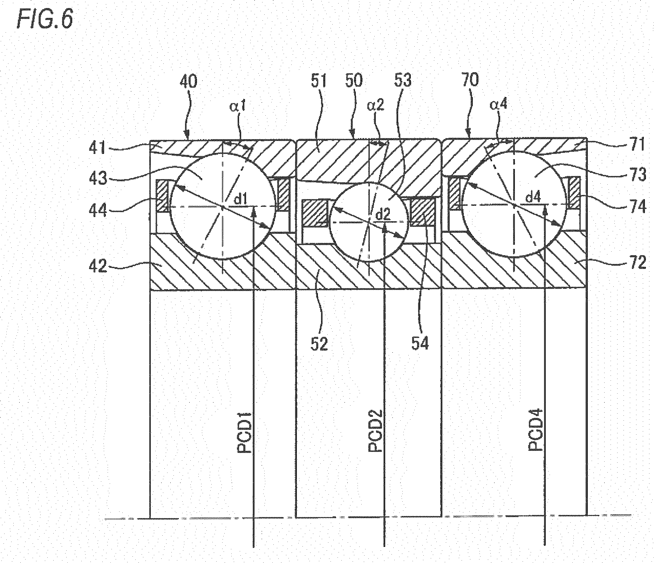

For example, like a third example not forming part of the present invention shown in FIG. 5, a multiple-row angular ball bearing of six rows is also possible, and like a fourth modified embodiment shown in FIG. 6, a multiple-row angular ball bearing of three rows is also possible.

Specifically, in the multiple-row angular ball bearing of six rows shown in FIG. 5, angular ball bearings 80, 90 of intermediate rows having outer rings 81, 91, inner rings 82, 92, balls 83, 93 and retainers 84, 94 are respectively arranged between the outer row bearings 40, 70 and the inner row bearings 50, 60. In this case, the ball diameters of the respective bearings are set so as to satisfy a relation of the ball diameters of the outer row bearings 40, 70>the ball diameters of the intermediate row bearings 80, 90>the ball diameters of the inner row bearings 50, 60 (d1, d4>d5, d6>d2, d3). Also, the ball pitch circle diameters of the respective bearings are set so as to satisfy a relation of the ball pitch circle diameters of the outer row bearings 40, 70> the ball pitch circle diameters of the intermediate row bearings 80, 90>the ball pitch circle diameters of the inner row bearings 50, 60 (PCD1, PCD4>PCD5, PCD6>PCD2, PCD3). Also, the contact angles of the respective bearings are set so as to satisfy a relation of the contact angles of the outer row bearings 40, 70>the contact angles of the intermediate row bearing 80, 90>the contact angles of the inner row bearings 50, 60 **(α1, α4>α5, α6>α2, α3).**

Also, as shown in FIG. 6, in the case of the multiple-row angular ball bearing of three rows where the inner row bearing 50 of one row is arranged between the outer row bearings 40, 70, the ball diameters of the respective bearings are preferably set so as to satisfy a relation of the ball diameters of the outer row bearings 40, 70>the ball diameter of the inner row bearing 50 (d1, d4>d2). Also, the ball pitch circle diameters of the respective bearings are preferably set so as to satisfy a relation of the ball pitch circle diameters of the outer row bearings 40, 70>the ball pitch circle diameter of the inner row bearing 50 (PCD1, PCD4>PCD2). Also, the contact angles of the respective bearings are preferably set so as to satisfy a relation of the contact angles of the outer row bearings 40, 70>the contact angle of the inner row bearing 50 (α1, α4>α2).

However, in a case of the combination bearing of even rows, the bearings of the same position from the axially outer side are preferably set to have the same contact angle. For example, in the case of the combination bearing of four rows shown in FIG. 2, when the contact angles α1, α4 of the outer row bearings 40, 70 of first and fourth rows from the tool-side and the contact angles α2, α3 of the inner row bearings 50, 60 of second and third rows are set to be the same, respectively, upon applying of fixed-position preloads, applied loads Fa1, Fa2, Fa3, Fa4 resulting from the preloads of the respective bearings become Fa1=Fa4, Fa2=Fa3, and Fa1+Fa2= Fa3+Fa4. Therefore, the same preload load is applied to the first and fourth rows and to the second and third rows, respectively, so that the preloads can be balanced.

Herein, for example, if the contact angles are set differently, such as first row: 20°, second row: 16°, third row: 16° and fourth row: 18°, contact surface pressures (particularly, third row) resulting from the preloads of the bearings 60, 70 of third and fourth rows become greater than those of the bearings 40, 50 of first and second rows, which is disadvantageous as to the seizure. However, if it is necessary to make it more difficult for the seizure of the bearing 50 of second row to occur than the seizure of the bearing 60 of third row, such as a case where the temperature difference between the inner and outer rings of the bearing 50 of second row is greater than the bearing 60 of third row, the contact angles of the bearings 40, 70 of first and fourth rows can be changed, as described above.

Also, in a case of the combination bearing of odd rows, when the bearings are combined in a back-surface manner, the bearing of which the contact angle faces in a radially opposite direction to the contact angle of the bearing positioned at the axially intermediate part is preferably set to have the contact angle greater than the bearing of the same position from the axially outer side.

For example, in the case of the combination bearing of three rows shown in FIG. 6, the contact angles α1, α2 of the bearings 40, 50 of first and second rows and the contact angle α4 of the bearing 70 of third row face in the radially opposite directions each other, the applied loads Fa1, Fa2, Fa3 resulting from the preloads of the bearings of respective rows become Fa1+Fa2=Fa3 and Fa3>Fa1>Fa2, and the bearing 70 of third row is applied with the preload loads of the bearings 40, 50 of first and second rows, so that the contact surface pressure thereof resulting from the preloads increases. For this reason, when the contact angle α4 of the bearing 70 of third row is set greater than the contact angle α1 of the bearing 40 of first row (α1<α4 and α1<α2), it is possible to suppress the increase in the contact surface pressure of the bearing 70 of third row resulting from the preload loads.

Also, in the embodiment, the ball diameters d1, d4 of both the outer row bearings 40, 70 are set greater than the ball diameters d2, d3 of the inner row bearings 50, 60. However, considering the main shaft collision at the tool-side tip end of the main shaft, the ball diameter d1 of only the outer row bearing 40 axially closest to the tool may be set greater than the ball diameters d2, d3 of the inner row bearings 50, 60.

However, the outer row bearing 70 axially most distant from the tool is most applied with the load from rear by the draw bar 23 when releasing a chuck of the tool upon replacement of the tool. Therefore, like the embodiment, the ball diameters d1, d4 of both the outer row bearings 40, 70 are preferably set greater than the ball diameters d2, d3 of the inner row bearings 50, 60.

Also, the lubrication condition is not limited to the grease lubrication, and any lubrication method such as oil-air lubrication, oil-mist lubrication, under-race lubrication, jet lubrication or the like can also be applied.

Also, regarding the combination method of the bearings, a front-surface combination (a combination where the contact angles face in a V-shaped direction) may also be adopted, in addition to the back-surface combination.

Also, the combination ball bearing of the present invention is not limited to the spindle device for machine tool and may also be applied to other devices where the large load such as collision load is to be applied to the bearing.

Meanwhile, in the embodiment, the bearings of first and fourth rows have the same specification and the bearings of second and third rows have the same specification. However, the specifications may be set different, as necessary.

### Embodiments

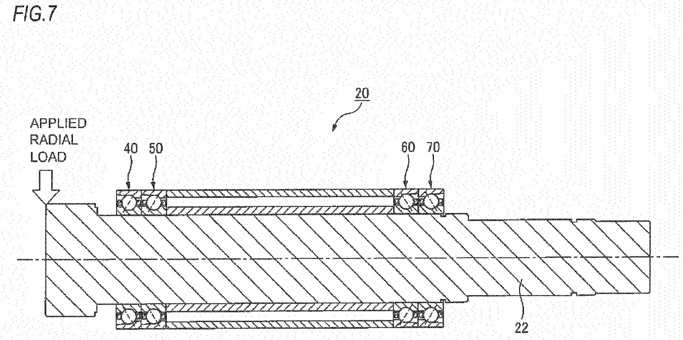

The four tests were performed using a conventional product where the ball diameters, the ball pitch circle diameters and the contact angles of the outer row bearings 40, 70 and the inner row bearings 50, 60 are the same and invented products A to E where the ball diameters, the ball pitch circle diameters and the contact angles of the outer row bearings 40, 70 and the inner row bearings 50, 60 are changed. FIG. 7 is a schematic view of a general spindle device 20 for machine tool to which a four-row back-surface combination of angular ball bearings is mounted. FIG. 7 depicts a conventional product where the ball diameters, the ball pitch circle diameters and the contact angles of the outer row bearings 40, 70 and the inner row bearings 50, 60 are the same.

Also, the bearing arrangement has first, second, third and fourth rows from an axial tool-side (a left side in FIG. 7). In the invented products A to E, the bearings of first and fourth rows have the same specification, the bearings of second and third rows have the same specification, and a bilaterally symmetric structure is formed in the four-row combination. In the conventional product and invented products A to E, the common bearing sizes to the respective bearings are as follows.
- bearing sizes
   - inner diameter φ70mm
   - outer diameter φ125mm
   - with 24mm

### <Limit Radial Load>

First, as shown with an arrow in FIG. 7, it was assumed that the radial load was applied to the shaft tip end, and limit radial loads were compared with a following calculation condition. Table 1 shows a comparison result of the limit radial loads. In the meantime, the limit radial load means the minimum radial load at which an indentation causing the machining precision problem or acoustic problem is to occur at the contact part between the ball and the raceway surface of the bearing of first row (row closest to the tool), which is applied with the largest load when the radial load is applied to the shaft tip end.
- calculation condition
   - preload load 950N

**[Table 1]**

| (ratios when the conventional product is assumed as 100) | | | | | | |
|---|---|---|---|---|---|---|
| | Bearing specification | First row | Second row | Third row | Fourth row | Limit radial load |
| Conventional product | ball diameter | 12 | 12 | 12 | 12 | 100 |
| | ball pitch circle diameter | Φ90 | Φ90 | Φ90 | Φ90 | |
| | contact angle | 18° | 18° | 18° | 18° | |
| Invented product A | ball diameter | 17 | 12 | 12 | 17 | 150 |
| | ball pitch circle diameter | Φ90 | Φ90 | Φ90 | Φ90 | |
| | contact angle | 18° | 18° | 18° | 18° | |
| Invented product B | ball diameter | 17 | 12 | 12 | 17 | 150 |
| | ball pitch circle diameter | Φ90 | Φ90 | Φ90 | Φ90 | |
| | contact angle | 20° | 18° | 18° | 20° | |
| Invented product C | ball diameter | 17 | 12 | 12 | 17 | 150 |
| | ball pitch circle diameter | Φ97 | Φ90 | Φ90 | Φ97 | |
| | contact angle | 20° | 18° | 18° | 20° | |
| Invented product D | ball diameter | 17 | 12 | 12 | 17 | 150 |
| | ball pitch circle diameter | Φ97 | Φ90 | Φ90 | Φ97 | |
| | contact angle | 25° | 15° | 15° | 25° | |
| Invented product E | ball diameter | 17 | 10 | 10 | 17 | 150 |
| | ball pitch circle diameter | Φ97 | Φ85 | Φ85 | Φ97 | |
| | contact angle | 25° | 15° | 15° | 25° | |

From the result of Table 1, it can be seen that when the limit radial load of the conventional product is assumed as 100, the limit radial load is improved in the invented products A to E where the ball diameter of the bearing 40 of first row, which is the bearing of the row axially closest to the tool, is set greater. From this result, it can be seen that when the ball diameter of the bearing 40 of first row, which is applied with the largest load when the main shaft is applied with the radial load, is increased, the limit load of the bearing of first row increases, as compared to the conventional product, so that the shock resistance in the radial direction is improved.

### <Axial Load Share Ratio>

Next, axial load share ratios were compared with following calculation conditions by using the conventional product and the invented products C to E.
- calculation conditions
   - preload load 950N
   - external axial load 3000N

Table 2 shows a comparison result of the axial load share ratios. Table 2 is a calculation result indicating how the axial load share ratio changes in the bearings 40, 50 of first and second rows, which are a load-side, when the axial load is applied to the main shaft system.

**[Table 2]**

| | Bearing specification | First row | Second row | Third row | Fourth row | First row | Second row |
|---|---|---|---|---|---|---|---|
| Conventional product | ball diameter | 12 | 12 | 12 | 12 | 1500N (50%) | 1500N (50%) |
| | ball pitch circle diameter | Φ90 | Φ90 | Φ90 | Φ90 | | |
| | contact angle | 18° | 18° | 18° | 18° | | |
| Invented product C | ball diameter | 17 | 12 | 12 | 17 | 1550N (52%) | 1450N (48%) |
| | ball pitch circle diameter | Φ97 | Φ90 | Φ90 | Φ97 | | |
| | contact angle | 20° | 18° | 18° | 20° | | |
| Invented product D | ball diameter | 17 | 12 | 12 | 17 | 2040N (68%) | 960N (32%) |
| | ball pitch circle diameter | Φ97 | Φ90 | Φ90 | Φ97 | | |
| | contact angle | 25° | 15° | 15° | 25° | | |
| Invented product E | ball diameter | 17 | 10 | 10 | 17 | 2100N (70%) | 900N (30%) |
| | ball pitch circle diameter | Φ97 | Φ85 | Φ85 | Φ97 | | |
| | contact angle | 25° | 15° | 15° | 25° | | |

From the result of Table 2, it can be seen that the load share ratio increases in the outer row bearing 40 of First row having the greater contact angle, as compared to the inner row bearing 50 of second row. Also, in the invented products C to E, the outer row bearing 40 of first row, which has the greater contact angle and is applied with the larger load, has the ball diameter and limit load greater than the inner row bearing 50 of second row. Therefore, it can be seen that since the load of the bearing 50 of second row is reduced, as compared to the conventional product, it is possible to apply the larger axial load, so that the shock resistance in the axial direction is improved.

Also, it can be seen that when the external load in the axial direction is applied during the high-speed rotation, for example, it is possible to reduce the load, which is to be applied to the bearing 50 of second row (the inner row bearing), so that the inner row bearing 50 is difficult to be damaged such as seizure.

At this time, when the contact angles of the outer row bearings 40, 70 are set to be excessively great or when the contact angles difference from the inner row bearings 40, 60 are set to be excessively great, the amounts of heat generation of the outer row bearings 40, 70 increase and the applied load increases, so that the seizure risk of the outer row bearings 40, 70 increases. Therefore, the contact angle of each row is preferably set within a range from a minimum value of 10° or greater (the inner row bearing) to a maximum value of 30° or less (the outer row bearing), and more preferably a range from a minimum value of 15° or greater (the inner row bearing) to a maximum value of 25° or less (the outer row bearing). The contact angles may be appropriately selected in conformity to the high-speed characteristics of the main shaft (an occurrence frequency and a risk of the seizure), such as arrangement and number of combination rows of bearings of the main shaft, capacity of built-in motor, cooling efficiency of the outer cylinder, and the like.

### <Moment Stiffness>

Next, the moment stiffness was compared with following calculation conditions by using the conventional product and the invented products C to E. Table 3 shows a comparison result of the moment stiffness.
- calculation conditions
   - preload load 950N
   - inclination angle: 30 seconds (inclination angle as the combination bearing)

**[Table 3]**

| (ratios when the conventional product is assumed as 100) | | | | | | |
|---|---|---|---|---|---|---|
| | Bearing specification | First row | Second row | Third row | Fourth row | Moment stiffness |
| Conventional product | ball diameter | 12 | 12 | 12 | 12 | 100 |
| | ball pitch circle diameter | Φ90 | Φ90 | Φ90 | Φ90 | |
| | contact angle | 18° | 18° | 18° | 18° | |
| Invented product C | ball diameter | 17 | 12 | 12 | 17 | 101 |
| | ball pitch circle diameter | Φ97 | Φ90 | Φ90 | Φ97 | |
| | contact angle | 20° | 18° | 18° | 20° | |
| Invented product D | ball diameter | 17 | 12 | 12 | 17 | 105 |
| | ball pitch circle diameter | Φ97 | Φ90 | Φ90 | Φ97 | |
| | contact angle | 25° | 15° | 15° | 25° | |
| Invented product E | ball diameter | 17 | 10 | 10 | 17 | 106 |
| | ball pitch circle diameter | Φ97 | Φ85 | Φ85 | Φ97 | |
| | contact angle | 25° | 15° | 15° | 25° | |

From the result of Table 3, it can be seen that when the ball pitch circle diameters of the outer row bearings 40, 70 are increased, the moment stiffness of the combination bearing can be improved. In the case of the invented products D, E, it can be expected that the moment stiffness can be improved by about 5%, as compared to the conventional product. The radial bending stiffness of the main shaft is determined by the combination with the bending stiffness of the shaft itself, in addition to the bearing stiffness. Since the bending of the shaft itself is reduced as the moment stiffness of the bearing is improved, it can be expected that the actual bending stiffness of the main shaft can be improved beyond the calculation result.

### <Axial Stiffness>

Next, the axial stiffness was compared with following calculation conditions by using the conventional product and the invented products C to E. Table 4 shows a comparison result of the axial stiffness.
- calculation conditions
   - preload load 950N
   - axial displacement 5.0µm

**[Table 4]**

| (ratios when the conventional product is assumed as 100) | | | | | | |
|---|---|---|---|---|---|---|
| | Bearing specification | First row | Second row | Third row | Fourth row | Axial stiffness |
| Conventional product | ball diameter | 12 | 12 | 12 | 12 | 100 |
| | ball pitch circle diameter | Φ90 | Φ90 | Φ90 | Φ90 | |
| | contact angle | 18° | 18° | 18° | 18° | |
| Invented product C | ball diameter | 17 | 12 | 12 | 17 | 102 |
| | ball pitch circle diameter | Φ97 | Φ90 | Φ90 | Φ97 | |
| | contact angle | 20° | 18° | 18° | 20° | |
| Invented product D | ball diameter | 17 | 12 | 12 | 17 | 113 |
| | ball pitch circle diameter | Φ97 | Φ90 | Φ90 | Φ97 | |
| | contact angle | 25° | 15° | 15° | 25° | |
| Invented product E | ball diameter | 17 | 10 | 10 | 17 | 114 |
| | ball pitch circle diameter | Φ97 | Φ85 | Φ85 | Φ97 | |
| | contact angle | 25° | 15° | 15° | 25° | |

From the result of Table 4, it can be seen that when the contact angles of the outer row bearings 40, 70 are increased, the axial stiffness of the combination bearing can be improved. In the invented products D, E, it can be expected that the axial stiffness can be improved by about 10% or greater, as compared to the conventional product. Since the axial stiffness of the main shaft is substantially determined by the axial stiffness of the combination bearing mounted to the main shaft, it can be seen from the result of Table 4 that the axial stiffness of the main shaft system is also improved.

**Description of Reference Numerals**

| | |
|---|---|
| 20: spindle device | 22: rotary shaft |
| 30: rotor | 32: stator |
| 40, 50, 60, 70, 80, 90: front side bearing (angular ball bearing) | |
| α1, α2, α3, α4, α5, α6: contact angle | |
| PCD1, PCD2, PCD3, PCD4, PCD5. PCD6: ball pitch circle diameter | |
| d1, d2, d3, d4, d5, d6: ball diameter | |
| H: housing | |

## Claims

1. A combination ball bearing of even rows comprising angular ball bearings (40, 50, 60, 70) axially arranged in four or more even rows,
wherein a ball pitch circle diameter ratio is configured such that 1.0 ≤ ball pitch circle diameter of one of the outer row bearings/ball pitch circle diameter of one of the inner row bearings < 1.5,
wherein the ball bearings (40, 50, 60, 70) are axially arranged bilaterally symmetric, wherein a contact angle (α1, α4) of the angular ball bearing (40, 70) arranged at the axially outer side is greater than a contact angle (α2, α3) of the angular ball bearing (50, 60) arranged at the axially inner side,
wherein the contact angle (α1, α2, α3, α4) of each row of angular ball bearings (40, 50, 60, 70) is between 10° and 30°, and
wherein the angular ball bearings (40, 50, 60, 70) are arranged so as to configure a back-surface combination, **characterised in that**
a ball diameter (d1, d4) of at least one of the angular ball bearings (40, 70) arranged at an axially outer side is greater than a ball diameter (d2, d3) of the angular ball bearings (50, 60) arranged at an axially inner side,
wherein a ball diameter ratio is configured such that 1.0 < ball diameter of one of the outer row bearings/ball diameter of one of the inner row bearings < 4.6.

2. The combination ball bearing according to claim 1, **characterized in that**
the ball pitch circle diameter (PCD1, PCD4) of the angular ball bearing (40, 70) arranged at the axially outer side is greater than a ball pitch circle diameter (PCD2, PCD3) of the angular ball bearing (50, 60) arranged at the axially inner side.

3. A spindle device (20) for a machine tool comprising the combination ball bearing according to claim 1 or 2.

## Patentansprüche

1. Kombiniertes Kugellager aus geraden Reihen, das Schrägkugellager (40, 50, 60, 70) umfasst, die axial in vier oder mehr geraden Reihen angeordnet sind,
wobei ein Verhältnis des Kugel-Teilkreisdurchmessers so ausgeführt ist, dass 1,0 ≤ Kugel-Teilkreisdurchmesser eines der Lager der äußeren Reihe/Kugel-Teilkreisdurchmesser eines der Lager der inneren Reihe < 1,5 gilt,
wobei die Kugellager (40, 50, 60, 70) axial bilateralsymmetrisch angeordnet sind,
ein Kontaktwinkel (α1, α4) des an der axial außen liegenden Seite angeordneten Schrägkugellagers (40, 70) größer ist als ein Kontaktwinkel (α2, α3) des an der axial innen liegenden Seite angeordneten Schrägkugellagers (50, 60),
der Kontaktwinkel (α1, α2, α3, α4) jeder Reihe von Schrägkugellagern (40, 50, 60, 70) zwischen 10° und 30° liegt, und
die Schrägkugellager (40, 50, 60, 70) so angeordnet sind, dass sie eine Rückseiten-Kombination bilden, **dadurch gekennzeichnet, dass**
ein Kugeldurchmesser (d1, d4) wenigstens eines der an der axial außen liegenden Seite angeordneten Schrägkugellager (40, 70) größer ist als ein Kugeldurchmesser (d2, d3) der an der axial innen liegenden Seite angeordneten Schrägkugellager (50, 60),
wobei ein Verhältnis des Kugeldurchmessers so ausgeführt ist, dass 1,0 < Kugeldurchmesser eines der Lager der äußeren Reihe/Kugeldurchmesser eines der Lager der inneren Reihe < 4,6 gilt.

2. Kombiniertes Kugellager nach Anspruch 1, **dadurch gekennzeichnet, dass**
der Kugel-Teilkreisdurchmesser (PCD1, PCD4) des an der axial außen liegenden Seite angeordneten Schrägkugellagers (40, 70) größer ist als ein Kugel-Teilkreisdurchmesser (PCD2, PCD3) des an der axial innen liegenden Seite angeordneten Schrägkugellagers (50, 60).

3. Spindelvorrichtung (20) für eine Werkzeugmaschine, die das kombinierte Kugellager nach Anspruch 1 oder 2 umfasst.

## Revendications

1. Roulement à billes combiné constitué de rangées paires comprenant des roulements à billes angulaires (40, 50, 60, 70) disposés axialement en quatre ou plus de quatre rangées paires,
dans lequel un rapport de diamètre du cercle primitif de bille est configuré de telle sorte que 1,0 ≤ diamètre du cercle primitif de bille de l'un des roulements de rangée extérieure/diamètre du cercle primitif de bille de l'un des roulements de rangée intérieure < 1,5,
dans lequel les roulements à billes (40, 50, 60, 70) sont disposés axialement de manière bilatéralement symétrique,
dans lequel un angle de contact (α1, α4) du roulement à billes angulaire (40, 70) disposé sur le côté axialement extérieur est supérieur à un angle de contact (α2, α3) du roulement à billes angulaire (50, 60) disposé sur le côté axialement intérieur, dans lequel l'angle de contact (α1, α2, α3, α4) de chaque rangée de roulements à billes angulaires (40, 50, 60, 70) est compris entre 10° et 30°, et
dans lequel les roulements à billes angulaires (40, 50, 60, 70) sont agencés de manière à configurer une combinaison de surfaces arrière, **caractérisé en ce que** un diamètre de bille (d1, d4) d'au moins l'un des roulements à billes angulaires (40, 70) disposés sur un côté axialement extérieur est supérieur à un diamètre de bille (d2, d3) des roulements à billes angulaires (50, 60) agencés sur un côté axialement intérieur,
dans lequel un rapport de diamètre de bille est configuré de telle sorte que 1,0 < diamètre de bille de l'un des roulements de rangée extérieure/diamètre de bille de l'un des roulements de rangée intérieure < 4,6.

2. Roulement à billes combiné selon la revendication 1, **caractérisé en ce que** le diamètre du cercle primitif de bille (PCD1, PCD4) du roulement à billes angulaire (40, 70) disposé sur le côté axialement extérieur est supérieur à un diamètre du cercle primitif de bille (PCD2, PCD3) du roulement à billes angulaire (50, 60) disposé sur le côté axialement intérieur.

3. Dispositif de broche (20) pour une machine-outil comprenant le roulement à billes combiné selon la revendication 1 ou 2.
